# EUROPÄISCHE PATENTANMELDUNG

(11) **EP 1 027 976 A2**
(43) Veröffentlichungstag der Anmeldung: **16.08.2000**
(21) Anmeldenummer: 00250001.5
(22) Anmeldetag: 04.01.2000
(51) Int. Cl.: B29C 41/04, B29C 41/20, B29C 70/68, B29C 41/36, B29K 77/00, B29L 31/32

(54) **Verfahren zur Herstellung rotations-symmetrischer Bauteile wie Seilrollen, Laufräder oder dergleichen aus Kunststoff**

(30) Priorität: 12.02.1999 DE 19907471; 20.12.1999 DE 19963531
(71) Anmelder: MANNESMANN Aktiengesellschaft, 40213 Düsseldorf (DE); ENSINGER GMBH & CO, 71154 Nufringen (DE)
(72) Erfinder: Zollondz, Rüdiger, 66500 Hornbach (DE); Wagner, Walter, 93413 Cham (DE)
(74) Vertreter: Meissner, Peter E., Dipl.-Ing.

(57) **Zusammenfassung**

Die Erfindung betrifft ein Verfahren zur Herstellung rotationssymmetrischer Bauteile, wie Seilrollen, Laufräder oder dergleichen aus Kunststoff, insbesondere aus Guß-Polyamiden, bei dem der den Kunststoff charakterisierende Rohstoff vorzugsweise ε-Caprolactam mit variabel vorgebbaren Anteilen von Katalysatoren, Aktivatoren und Stabilisatoren vermischt und die so erzeugte Rohmaterialschmelze in erwärmte Formen gegossen und nach der Polymerisation die Form geöffnet und das gegossene Bauteil entnommen und falls erforderlich, mechanisch weiterverarbeitet wird. Erfindungsgemäß werden Rohmaterialschmelzen unterschiedlicher Rezepturen und Zusammensetzungen mit im auspolymerisierten Zustand unterschiedlichen mechanischen Festigkeitseigenschaften jeweils stufenweise, d. h. in Abhängigkeit vom Polymerisations-ablauf zeitlich aufeinanderfolgend in die Form gegossen.

## Beschreibung

Die Erfindung betrifft ein Verfahren zur Herstellung rotationssymmetrischer Bauteile wie Seilrollen, Laufräder oder dergleichen aus Kunststoff, insbesondere aus Guß-Polyamiden, gemäß dem Oberbegriff des Patentanspruches 1.

Im Dubbel Taschenbuch für den Maschinenbau, 18. Aufl., ist unter U9, 2.2.3 "Seilrollen und Seiltrommeln" der Hinweis enthalten, dass an Autokranen Seilrollen auch aus Kunststoff, vorzugsweise Polyamid-Guß verwendet werden. Die Herstellung von Guß-Polyamid-Formkörpern wie Seilrollen, Laufräder oder vergleichbare rotationssymmetrische Bauteile ist bekannt (Kunststoff Handbuch VI, Polyamide, Carl Hanser Verlag 1966, 5. 46-49). Bei dem bekannten Verfahren geht man von zwei Komponenten A und B aus, wobei die eine Komponente A eine Katalysator enthaltene Lactamschmelze und die Komponente B eine Aktivator enthaltene Lactamschmelze ist. Die beiden Komponenten werden gemischt, in eine erwärmte Form transportiert und dort auspolymerisiert. Nach der Polymerisation und Auskristallisierung wird das erstarrte Gußteil der Form entnommen und falls erforderlich einer mechanischen Nachbearbeitung zugeführt. Bevorzugtes Lactam ist ε-Caprolactam, darüber hinaus können andere Lactame sowie die entsprechenden C-substituierten Lactame eingesetzt werden.

Bevorzugt werden rotationssymmetrische Bauteile, wie Seilrollen, Seilscheiben, Laufräder oder dergleichen im Schleudergussverfahren hergestellt. Bei diesem Verfahren rotiert die beheizte Form mit hoher Geschwindigkeit um eine horizontal oder vertikal angeordnete Achse. Dabei wird die eingegossene Rohmaterialschmelze durch die Zentrifugalkraft an die Formwand gepreßt, um Schrumpflunker und Lufteinschlüsse zu verhindern.

Der Einsatz von Seilrollen oder Seilscheiben aus Kunststoff im Kranbau bietet folgende Vorteile: Die Beanspruchung des Seiles ist wegen der günstigen Pressungsverteilung zwischen Seilrolle und Seil geringer, so dass das Seil dadurch und durch den geringeren Verschleiß eine wesentlich höhere Lebensdauer erreicht. Zusätzlich bietet die Seilrolle aus Kunststoff Gewichts- und Kostenvorteile.

Das größte Problem der Seilrolle aus Kunststoff ist die Beanspruchung des Nabenbereiches (Lagersitz). Aus Kostengründen und wegen des Platzbedarfes (Breite des Lagers) wird ein möglichst kleinbauendes Lager verwendet. Da bei höheren Temperaturen, im extremen Fall können im Sommer bis zu 50°C erreicht werden, der E-Modul des Polyamides stark absinkt (20°C: 2800 N/mm²; 50°C: 1400 N/mm²) beginnt bei Schrägzug des Seiles der Lagersitz an der Kante nachzugeben. Dadurch entsteht insbesondere an der Kante des Lagersitzes eine zu hohe Pressung. Durch die Schrägstellung der Seilrolle verschiebt sich die Last und der Schrägzug erhöht sich weiter bis zum Versagen der Seilrolle.

In der DE 44 27 206 A1 wird vorgeschlagen, ein Faserverbundmaterial in Form von Matten, Rovings, Gewebe, Nadelfließ bzw. Filz, bestehend aus Glas- oder Kunststofffasern vor dem Polymerisationsvorgang ortsfest in die Form einzubringen, die Form dann auszugießen, um somit durch diese Verstärkungsstoffe die mechanischen Eigenschaften zu verbessern. Die Praxis hat jedoch gezeigt, dass dieses Verfahren sehr unsicher und aufwendig ist. Der Polymerisationsprozeß wird durch den Eintrag von Feuchtigkeit und durch die Anwesenheit von Schlichten auf den Fasern gestört. Die erwartete Zunahme der Festigkeitseigenschaften, vor allem in den Bereichen der Bauteile, wo sie erforderlich sind, ist durch die fehlende Reproduzierbarkeit nicht gegeben.

Aus der DE-AS 193 68 22 ist ein Verfahren zum Herstellen von Kunststoffteilen mit einstellbaren mechanischen Eigenschaften bekannt. Bei diesem Verfahren werden Teilchen aus Polytetrafluorethylen (PTFE) im Kunststoff eingebettet.

Das Problem dabei ist, eine vollständige und gleichmäßige Verteilung der Teilchen aus PTFE in der Kunststoffmasse zu erreichen, damit sowohl die Oberfläche des herzustellenden Gegenstandes, als auch jede beliebige Schnittfläche gleichmäßig durchsetzt sind. Diese Anforderung ist deshalb so schwer zu erfüllen, da die Viskosität der geschmolzenen Kunststoffmasse vergleichsweise gering ist, so dass die ein hohes spezifisches Gewicht aufweisenden PTFE-Teilchen verhältnismäßig rasch in der geschmolzenen Kunststoffmasse absinken und sich somit an einer Stelle anreichern.

Das geschilderte Problem wird in der Weise gelöst, dass in einer Vorstufe Teilchen eines thermoplastischen Kunststoffes mit Teilchen aus PTFE so gemischt werden, dass die Mischung im geschmolzenen Zustand des Kunststofffes die Dichte des gießfähigen Polymerisat aufweist. Durch die Egalisierung der Dichtunterschiede kommt es danach nicht mehr zu einer Entmischung infolge des Absinkens der PTFE-Teilchen im gießfähigen Polymerisat. Nach dem Erkalten der Mischung aus Kunststoff- und PTFE-Teilchen wird diese granuliert und das Granulat entsprechend den gewünschten mechanischen Eigenschaften dem gießfähigen Polymerisat zugemischt.

Es ist bekannt, dass PTFE ausschließlich aus tribologischen Gründen hinzugefügt wird, um das Reib- und Verschleißverhalten günstig zu beeinflussen. Die Zugabe von PTFE führt aber in allen Fällen zu einer Abnahme der Festigkeit. Dies trifft auch dann zu, wenn ein anderer Kunststoff als Zwischenträger für die PTFE-Partikel verwendet wird. Eine Einstellung mechanischer Eigenschaften beliebiger Art ist mit einer Zugabe von PTFE nicht möglich.

In einem zweiten Ausführungsbeispiel der genannten Schrift wird eine erste Schicht in der Gussform anpolymerisiert. Daraufhin wird in die Form eine Schicht aus einem vierten Material, beispielsweise eine Glasfasermatte eingebracht, ehe die nächste Schicht gegossen wird. Dieses vorgeschlagene Einlegen von Glasfasern als Zwischenschicht lässt sich ohne Fixiermittel nicht realisieren, da die Glasfaserschicht durch das Eigengewicht und den Massenstrom der nächsten Schicht nach unten bewegt wird. Bei Verwendung von Fixierelementen werden diese einpolymerisiert, was neben dem erhöhten und störenden Arbeitsaufwand erhebliche Qualitätsmängel zur Folge hat.

Aufgabe der Erfindung ist es, ein einfaches Verfahren zur Herstellung rotationssymmetrischer Bauteile wie Seilrollen, Laufräder oder dergleichen aus Kunststoff, vorzugsweise aus Guss-Polyamiden anzugeben, mit dem reproduzierbar die in ausgewählten Bereichen erforderliche Fertigkeitszunahme erzeugt werden kann.

Diese Aufgabe wird ausgehend vom Oberbegriff in Verbindung mit den kennzeichnenden Merkmalen des Patentanspruches 1 gelöst. Vorteilhafte Weiterbildungen sind Bestandteil von Unteransprüchen.

Kern der Erfindung ist die Verwendung von Lactamschmelzen unterschiedlicher Rezepturen und Zusammensetzungen mit im auspolymerisierten Zustand unterschiedlichen Festigkeitseigenschaften, die in Abhängigkeit vom Polymerisationsablauf ohne Abbruch des Schleudervorganges zeitlich aufeinanderfolgend in die Form gegossen werden.

Durch gezielte Zugabe von Füll- und / oder Verstärkungsstoffen, wie z.B. Glas-, Kohlenstoff-, Aramid- und Naturfasern, laminares Talkum, silanbehandeltes Wollastonit, Talk-Pellets etc. oder Glaskugeln, können neben der Variation von Lactamen, Aktivatoren, Katalysatoren, Kristallisationsbeschleuniger etc. die Werkstoff- und Baueigenschaften wie E-Modul, Zugfestigkeit, Arbeitsaufnahmevermögen etc. erheblich erhöht bzw. gezielt beeinflußt werden. Um z.B. den Nabenbereich gezielt zu verstärken, wird zuerst eine definierte mit Katalysator und Aktivator versehene gut durchmischte ε-Caprolactamschmelzenmenge, die dem Volumen des Bauteils vom äußeren Rand radial nach innen zum Nabenanfang entspricht, in die rotierende beheizte Form eingegossen und danach ohne die Rotation zu unterbrechen das weitere Eingießen gestoppt. Zum Zeitpunkt des Polymerisationsbeginns des bereits in die Form eingegossenen Volumens, wird für den Nabenbereich eine zweite, ebenfalls mit Katalysator und Aktivator aber mit Verstärkungsstoffen wie Glaskugeln oder Glasfasern versehene durchmischte ε-Caprolactamschmelze mit im Endzustand erhöhten Festigkeitseigenschaften eingegossen.

Da mit dem Beginn des Polymerisationsprozesses eine stetige Viskositätserhöhung der Lactamschmelze verbunden ist, findet beim Aufgießen von weiterer Lactamschmelze zwar eine innige und homogene Verbindung der beiden Schmelzen im Kontaktbereich statt, jedoch wird durch diesen Verfahrensablauf eine Durchmischung beider Lactamschmelzen verhindert. Nach der vollständigen Auspolymerisation wird der Gusskörper der Form entnommen und wie bisher mechanisch weiterverarbeitet.

Nach einem weiteren Merkmal der Erfindung ist eine Festigkeitszunahme in ausgewählten Bereichen auch dadurch möglich, dass ein oder mehrere festigkeits- und aussteifungserhöhende Elemente vor dem Gießprozess in die Gussform eingelegt werden und mit den zugegebenen Rohmaterialschmelzen einen form- und / oder kraft- oder stoffschlüssigen Verbund bilden. Vorzugsweise ist ein solches Einlegeelement aus Metall, dessen Festigkeitsniveau mindestens gleich ist oder über dem der verstärkten Rohmaterialschmelze liegt. Um einen guten Verbund zu erzielen, werden die Oberflächen des Einlegeelementes vor dem Vergießen aufgerauht und / oder die Einlegeelemente mit Vertiefungen, Nuten oder Durchbrüchen wie z. B. Schlitze oder Bohrungen versehen. Als Werkstoff für das Einlegeelement wird vorteilhaft Al bzw. eine Al-Legierung eingesetzt, da das spezifische Gewicht niedrig und die Festigkeit im Vergleich zum Kunststoff hoch ist.

Das Verfahren ist geeignet für alle rotationssymmetrischen Bauteile, die ringartige Volumenteile unterschiedlicher Festigkeit aufweisen. Neben dem Nabenbereich kann auch der nicht minder belastete Randbereich des Bauteiles, z. B. Seilrillenbereich, durch das neue Verfahren verstärkt werden.

Das vorgeschlagene Verfahren zeichnet sich dadurch aus, dass die Vorteile der aus Kunststoff hergestellten Bauteile weiterhin genutzt werden, insbesondere das niedrige Gewicht und das günstigere Pressungs- und Verschleißverhalten, ohne Nachteile im hoch beanspruchten Naben- bzw. Lagerbereich in Kauf nehmen zu müssen. Zusätzlich bietet das Verfahren die Möglichkeit, bei drucklos gegossenen Bauteilen oder Halbzeugen schichtweise unterschiedliche Materialien einzubauen, z. B. für Sandwichplatten oder dergleichen.

Weitere Merkmale, Vorteile und Einzelheiten der Erfindung ergeben sich aus der nachfolgenden Beschreibung von in einer Zeichnung dargestellten Ausführungsbeispiele. Es zeigen:
- Figur 1: einen ersten Arbeitsschritt zur Herstellung einer Seilrolle in einer ersten Ausführungsform
- Figur 2: einen zweiten Arbeitsschritt
- Figur 3: einen dritten und letzten Arbeitsschritt
- Figur 4: einen ersten Arbeitsschritt zur Herstellung einer Seilrolle in einer zweiten Ausführungsform
- Figur 5: einen zweiten Arbeitsschritt
- Figur 6: einen dritten Arbeitsschritt
- Figur 7: einen vierten und letzten Arbeitsschritt

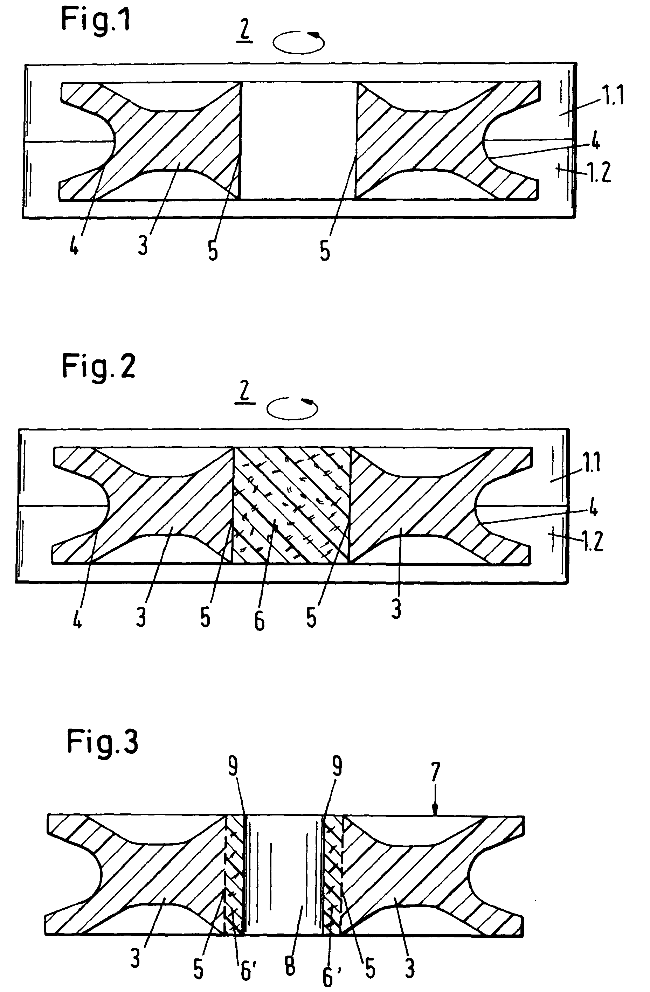

In den Figuren 1 bis 3 sind die wesentlichen Arbeitsschritte zur Herstellung einer erfindungsgemäß ausgebildeten Seilrolle in einer ersten Ausführungsform dargestellt. In einem ersten Arbeitsschritt wird in eine hier nur schematisch angedeutete geteilte 1.1; 1.2 Gussform 1 eine definierte mit Katalysator und Aktivator versehene gut durchmischte ε-Caprolactamschmelzenmenge eingegossen. Der Drehpfeil 2 soll verdeutlichen, dass die beheizte Gussform 1 sich während des Eingießens dreht. Die zuerst eingegossene Schmelzenmenge entspricht dem radialen Volumen 3 des Bauteiles vom äußeren Rand 4 nach innen bis zum Nabenanfang 5. Nach diesem Eingießen der ersten Schmelzenmenge wird, ohne die Rotation 2 der Gussform 1 zu unterbrechen, das weitere Eingießen gestoppt. Es setzt die Polymerisation der ersten Schmelzenmenge ein. Sobald diese das gesamte Volumen 3 erfasst hat, wird eine zweite, ebenfalls mit Katalysator und Aktivator, aber mit Verstärkungsstoffen versehene gut durchmischte ε-Caprolactamschmelze eingegossen. Da mit dem Beginn des Polymerisationsprozesses eine stetige Erhöhung der Viskosität der Lactamschmelze verbunden ist, findet beim Aufgießen einer weiteren Lactamschmelze zwar eine innige und homogene Verbindung statt, jedoch wird durch den vorgeschlagenen Verfahrensablauf eine Durchmischung beider Lactamschmelzen verhindert. Die zweite eingegossene ε-Caprolactamschmelze 6 (Figur 2) weist im auspolymerisierten Zustand erhöhte Festigkeitseigenschaften auf.

Durch die in Figur 1 und 2 erläuterte Verfahrenstechnik wird in diesem Ausführungsbeispiel der Nabenbereich gezielt verstärkt. Figur 3 zeigt die so hergestellte Seilrolle 7 nach der Entnahme aus der Gussform 1 und einer mechanischen Bearbeitung. Um das hier nicht dargestellte Lager aufnehmen zu können, wurde im verstärkten Nabenbereich 6 eine Bohrung 8 angebracht und zwar so, dass der Mantelbereich 6' bis zu einer gewissen Dicke aus der höherfesten ε-Caprolactamschmelze besteht. In diesem Mantelbereich 6' können die im Lagersitz auftretenden hohen Flächenpressungen besser aufgefangen werden, so dass es nicht zu einem Nachgeben insbesondere im Kantenbereich 9 kommt.

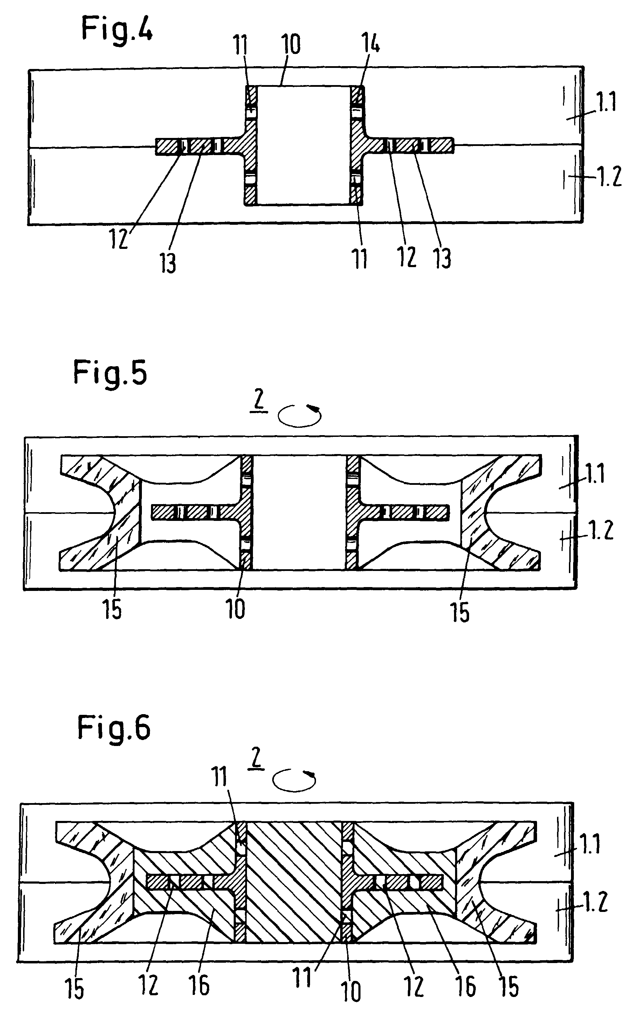

In den Figuren 4 - 7 sind die wesentlichen Arbeitsschritte zur Herstellung einer erfindungsgemäß ausgebildeten Seilrolle in einer zweiten Ausführungsform dargestellt. Dabei wurden für gleiche Teile gleiche Bezugszeichen verwendet. In einem ersten Arbeitsschritt (Figur 4) wird in die Gussform 1 ein den Nabenbereich aussteifendes Einlegeelement 10 eingelegt. Vorzugsweise ist dieses Einlegeelement 10 aus Metall.

Damit beim Eingießen zwischen dem Einlegeelement 10 und der Schmelze ein möglichst inniger Verbund entsteht, sind im Einlegeelement 10 mehrere Durchbrüche 11,12 in Form von Bohrungen angeordnet. Das Einlegeelement 10 ist im Hinblick auf eine gezielte Verstärkung des Nabenbereiches als zylindrische Buchse 14 ausgebildet, die einen in den Körper der Seilrolle sich erstreckenden scheibenartigen Kragen 13 aufweist.

Nach der Fixierung des Einlegeelementes 10 in der Gussform 1 wird die beheizte Gussform 1 in Rotation versetzt (siehe Drehpfeil 2). Es folgt das Eingießen der ersten ε-Caprolactamschmelze in den Randbereich 15 des Bauteiles. Die Kreuzschraffur soll verdeutlichen, dass es sich um eine mit Verstärkungsstoffen versetzte Schmelze handelt, um den Seilrollenbereich 15 gezielt zu verstärken. Wie schon zuvor in Figur 1 und 2 erläutert, wird wieder der Polymerisationsbeginn der zuerst eingegossenen Schmelze abgewartet, ehe das Eingießen der zweiten Schmelze beginnt. Die zweite Schmelze, die keine Verstärkungsstoffe aufweist, füllt den Restbereich 16 vom Randbereich 15 bis zum Nabenbereich auf Dabei kommt es zum Hineinfließen der Schmelze in die Öffnungen 11, 12 des Einlegeelementes 10 (Figur 6).

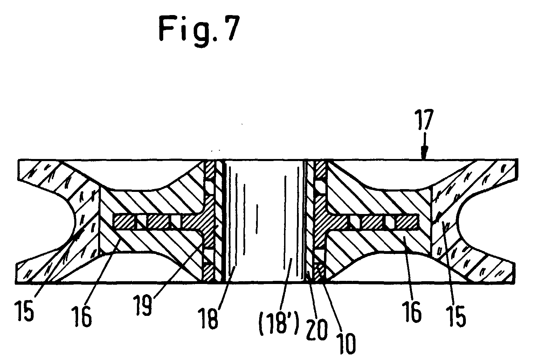

In Figur 7 ist die fertige Seilrolle 17 nach der Entnahme aus der Gussform und der mechanischen Bearbeitung dargestellt. Zur Aufnahme des Lagers wurde eine Bohrung 18 angebracht, die in diesem Ausführungsbeispiel der Innenfläche 19 des Einlegeelementes 10 entspricht. Es gibt andere Anwendungsfälle, bei denen man eine Teilschicht 20 der Schmelze in der Bohrung 18' stehen lässt (hier durch gestrichelte Linien dargestellt).

## Patentansprüche

1. Verfahren zur Herstellung rotationssymmetrischer Bauteile, wie Seilrollen, Laufräder oder dergleichen aus Kunststoff, insbesondere aus Guß-Polyamiden, bei dem der den Kunststoff charakterisierende Rohstoff vorzugsweise ε-Caprolactam mit variabel vorgebbaren Anteilen von Katalysatoren, Aktivatoren und Stabilisatoren vermischt und die so erzeugte Rohmaterialschmelze in erwärmte Formen gegossen und nach der Polymerisation die Form geöffnet und das gegossene Bauteil entnommen und falls erforderlich, mechanisch weiterverarbeitet wird,
dadurch gekennzeichnet,
dass Rohmaterislschmelzen unterschiedlicher Rezepturen und Zusammensetzungen mit im auspolymerisierten Zustand unterschiedlichen mechanischen Festigkeitseigenschaften jeweils stufenweise, d. h. in Abhängigkeit vom Polymerisationsablauf zeitlich aufeinanderfolgend in die Form gegossen werden.

2. Verfahren nach Anspruch 1,
dadurch gekennzeichnet,
dass in die Rohmaterialschmelzen Füll- und /oder Verstärkungsstoffe zugegeben werden.

3. Verfahren nach Anspruch 2,
dadurch gekennzeichnet,
dass der Füll- und / oder Verstärkungsstoff eine Faser ist.

4. Verfahren nach Anspruch 2,
dadurch gekennzeichnet,
dass der Füll- und / oder Verstärkungsstoff ein Rundkörper aus Glas ist.

5. Verfahren nach Anspruch 1,
dadurch gekennzeichnet,
dass ein oder mehrere festigkeits- und aussteifungserhöhende Elemente vor dem Gießprozess in die Gussform eingelegt werden und mit den zugegebenen Rohmaterialschmelzen einen form- und / oder kraft- oder stoffschlüssigen Verbund bilden.

6. Verfahren nach Anspruch 5,
dadurch gekennzeichnet,
dass das Festigkeitsniveau der Einlegeelemente mindestens gleich ist oder über dem der verstärkten Rohmaterialschmelzen liegt.

7. Verfahren nach Anspruch 5 und 6,
dadurch gekennzeichnet,
dass das Einlegeelement aus Metall ist.

8. Verfahren nach Anspruch 7,
dadurch gekennzeichnet,
dass für das Einlegeelement Al oder eine Al-Legierung verwendet wird.

9. Verfahren nach einem der Ansprüche 5 - 8,
dadurch gekennzeichnet,
dass die Oberflächen des bzw. der Einlegeelemente vor dem Vergießen aufgerauht und / oder mit Vertiefungen, Nuten oder Durchbrüchen versehen werden.

10. Verfahren nach einem der Ansprüche 1 - 9,
dadurch gekennzeichnet,
dass die Rohmaterialschmelzen ohne Abbruch des Schleudervorganges in eine Schleudergußform eingefüllt werden.

11. Verfahren nach einem der Ansprüche 1 - 4 und 10,
dadurch gekennzeichnet,
dass zur gezielten Verstärkung des Nabenbereiches zuerst eine definierte mit Katalysator und Aktivator versehene gut durchmischte ε-Caprolactamschmelzenmenge, die dem Volumen des Bauteiles vom äußeren Rand radial nach innen bis zum Nabenanfang entspricht, in die rotierende beheizte Form gegossen und danach, ohne die Rotation zu unterbrechen, das weitere Eingießen gestoppt und zum Zeitpunkt des Polymerisationsbeginns des bereits in die Form eingegossenen Volumens für den Nabenbereich eine zweite, ebenfalls mit Katalysator und Aktivator, aber mit Verstärkungsstoffen versehene durchmischte ε-Caprolactamschmelze mit im auspolymerisierten Zustand erhöhten Festigkeitseigenschaften eingegossen wird.

12. Verfahren nach Anspruch 11,
dadurch gekennzeichnet,
dass zusätzlich in den Randbereich des Bauteiles eine ε-Caprolactamschmelze mit im auspolymerisierten Zustand erhöhten Festigkeitseigenschaften eingegossen wird.

13. Verfahren nach einem der Ansprüche 1 - 10,
dadurch gekennzeichnet,
dass zur gezielten Verstärkung des Rand- und Nabenbereiches des Bauteiles vor dem Gießprozess ein den Nabenbereich festigkeits- und aussteifungserhöhendes Element in die Gussform eingelegt wird und in die rotierende beheizte Form zuerst in den Randbereich des Bauteiles eine mit Verstärkungsstofffen versehene ε-Caprolactamschmelze mit im auspolymerisierten Zustand erhöhten Festigkeitseigenschaften eingegossen wird und danach , ohne die Rotation zu unterbrechen, das weitere Eingießen gestoppt und zum Zeitpunkt des Polymerisationsbeginns der bereits in die Form gegossenen Schmelze für den Restbereich eine mit Katalysator und Aktivator versehene gut durchmischte ε-Caprolactamschmelze eingegossen wird.
